# EUROPÄISCHE PATENTSCHRIFT

(11) **EP 2 873 180 B1**
(45) Veröffentlichungstag und Bekanntmachung des Hinweises auf die Patenterteilung: **19.10.2016**
(21) Anmeldenummer: 13730880.5
(22) Anmeldetag: 20.06.2013
(51) Int. Cl.: H04B 17/00, G05B 19/00, H04B 3/46

(54) **VERFAHREN UND VORRICHTUNG ZUR DIAGNOSE EINES KOMMUNIKATIONSKANALS**
METHOD AND DEVICE FOR DIAGNOSING A COMMUNICATION CHANNEL
PROCÉDÉ ET DISPOSITIF DE DIAGNOSTIC D'UN CANAL DE COMMUNICATION

(30) Priorität: 16.07.2012 DE 102012106375
(43) Veröffentlichungstag der Anmeldung: 20.05.2015
(73) Patentinhaber: Endress+Hauser Wetzer GmbH+Co. KG, 87484 Nesselwang (DE)
(72) Erfinder: WÖHRLE, Markus, 87637 Eisenberg (DE); KLOTZ, Günter, 87700 Memmingen (DE); HORN, Christoph, 87629 Füssen (DE)
(74) Vertreter: Andres, Angelika Maria
(86) Internationale Anmeldenummer: PCT/EP2013/062887
(87) Internationale Veröffentlichungsnummer: WO 2014/012739

(56) Entgegenhaltungen:
- DE-A1-102004 035 609
- US-A1- 2004 113 814
- CHANCA M ET AL: "A Multimode 0.3-200-kb/s Transceiver for the 433/868/915-MHz Bands in 0.25-<tex>$mu$</tex>m CMOS", IEEE JOURNAL OF SOLID-STATE CIRCUITS, IEEE SERVICE CENTER, PISCATAWAY, NJ, USA, Bd. 39, Nr. 12, 1. Dezember 2004 (2004-12-01), Seiten 2297-2310, XP011122667, ISSN: 0018-9200, DOI: 10.1109/JSSC.2004.836330

## Beschreibung

Die Erfindung bezieht sich auf eine Vorrichtung zur Diagnose eines Kommunikationskanals und auf entsprechendes Verfahren.

Feldgeräte der Automatisierungs- und/oder Prozessmesstechnik werden bspw. in industriellen Anlagen eingesetzt, und dienen dort zur Ermittlung und/oder Überwachung und/oder zur Anzeige einer Prozessgröße, wie beispielsweise des Durchflusses, des Füllstands, des Drucks, der Temperatur oder des pH-Werts eines Messstoffs. Diese Feldgeräte sind oftmals untereinander und/oder mit einer übergeordneten Einheit kommunikativ verbunden.

Zur Datenübertragung zwischen den Feldgeräten und/oder der übergeordneten Einheit sind eine Reihe von Feldbussystemen aus dem Stand der Technik bekannt geworden. Zur Datenübertragung über die Feldbussysteme werden heutzutage standardisierte Protokolle, wie beispielsweise HART, Profibus oder Foundation Fieldbus als auch verschiedene Ethernet-Standards verwendet. Die Kommunikationsverbindung zwischen den Feldgeräten und/oder der übergeordneten Einheit wird im Folgenden als Kommunikationskanal bezeichnet. Der Kommunikationskanal kann andererseits, wie in einem Ausführungsbeispiel der vorliegenden Erfindung beschrieben, aus einer Übertragungsstrecke zur Übertragung des frequenzmodulierten Signals zwischen der Sendeeinheit und der Empfangseinheit der vorgeschlagenen Vorrichtung, bei der es sich bevorzugt um ein Feldgerät handelt, gebildet werden.

Zur Diagnose der Betriebs- und Umgebungsbedingungen derartiger Feldgeräte ist aus der DE102007062919A1 eine Vorrichtung bekannt geworden, die eine Regel-/Auswerteeinheit aufweist, die einen aktuellen Schleifenstrom ermittelt. Zu diesem Zweck ist ein Messwiderstand in dem Feldgerät integriert.

Aus der US2004/0113814A1 ist ein universelles, intelligentes Modem bekannt geworden, mit dessen Hilfe Signale aus einer Stromschleife empfangen und zu dieser gesendet werden können, wobei das Signal frequenzmoduliert ist und das Modem einen Demodulator und einen A/D-Wandler besitzt, durch welche die Amplitude des empfangenen Signals bestimmt werden kann .

Aus der DE102004035609 ist ein Mobilfunkempfänger mit einstellbarer Verstärkung bekannt geworden, der einen Vergleich empfangener Signale mit einem Vergleichswert hinsichtlich Amplitude oder Leistung ermöglicht.

Aus Chanca M. et al, "A Mulitmode 0.3-200-kb/s Tranceiver for the 433/868/915-MHz Bands in 0.25 µm-CMOS", veröffentlicht in IEEE Journal of Solid-State circuits, USA, 2004, ist ein Sendeempfänger bekannt geworden, der einen Frequency-Shift Keying (FSK)-Demodulator enthält und die Möglichkeit der Selbstkalibrierung bietet.

Ferner ist aus der DE102009050645A1 ein Feldgerät bekannt geworden, bei dem zur Überwachung eines von den Feldgeräten erzeugten analogen Ausgangssignals, ein erster Rücklesekanal für das analoge Ausgangssignal vorhanden ist, welches analoge Ausgangssignal mit einem Vergleichssignal zur Ermittlung einer Abweichung verglichen wird.

Diese aus dem Stand der Technik bekannten Auswerte- und Diagnosevorrichtungen beziehen sich aber sämtlich auf ein analoges Ausgangssignal bzw. auf die vermittels des Kommunikationssignals übertragenen Informationen. Eine (rein) physikalische Auswertung, der aus dem Stand der Technik bekannten Feldbusprotokolle lässt sich damit jedoch nicht erreichen. Insbesondere ist es aus dem Stand der Technik nicht bekannt geworden, anhand des (digitalen) Kommunikationssignals (an sich) auf die Qualität der Signalübertagung über den Feldbus zu schließen.

Es ist somit Aufgabe der vorliegenden Erfindung eine Möglichkeit zur Diagnose des Kommunikationskanals eines modernen Feldbusprotokolls vorzuschlagen.

Die Aufgabe wird erfindungsgemäß durch eine Vorrichtung und ein Verfahren gelöst.

Hinsichtlich der Vorrichtung wird die Aufgabe durch eine Vorrichtung zur Diagnose eines Kommunikationskanals gelöst, wobei ein Kommunikationssignal zur Datenübertragung über den Kommunikationskanal dient, wobei es sich bei dem Kommunikationssignal um ein frequenzmoduliertes Signal handelt. Bei dem frequenzmodulierten Signal handelt es sich bevorzugt um ein ein digitales Signal präsentierendes frequenzmoduliertes Signal. Dieses frequenzmoduliertes Signal entspricht bevorzugt einem der bekannten Standards zur Datenübertragung über einen Feldbus wie bspw. HART. Bei dem Kommunikationskanal handelt es sich bevorzugt um ein Frequenzband, in welchem sich das frequenzmodulierte Signal bewegt. Als physikalische Strecke zur Übermittlung, d.h. als Träger, des Kommunikationskanals dient beispielsweise eine Zweidrahtleitung über die, das Kommunikationssignal übertragen wird. Bspw. können ein oder mehrere Feldgeräte und/oder eine übergeordnete Einheit an diese Zweidrahtleitung angeschlossen bzw. über die Zweidrahtleitung miteinander verbunden sein.

Die Vorrichtung umfasst ferner eine Empfangsschaltung, die zum Empfangen des frequenzmodulierten Signals dient. Die vorgeschlagene Vorrichtung kann beispielsweise Teil eines Feldgerätes sein, das zum Erfassen und/oder Anzeigen einer Messgröße eines Messstoffs dient. Die Empfangsschaltung kann bspw. als Bestandteil des Feldgerätes einerseits, vorzugsweise unmittelbar, mit der Zweidrahtleitung und andererseits (ebenfalls unmittelbar) mit einer feldgeräteinternen Betriebselektronik verbunden sein. Vorzugsweise kann die Betriebselektronik eines Feldgerätes als auch die Empfangsschaltung in einem gemeinsamen Gehäuse untergebracht sein. Die Betriebselektronik des Feldgerätes dient dabei der Ausführung der primären Funktionen des Feldgerätes wie bspw. dem Anzeigen, Bestimmen und/oder Überwachen eines Messwerts eines Messstoffs.

Die Empfangsschaltung umfasst ferner eine Überwachungseinheit, die dazu dient, einen Signalparameter des frequenzmodulierten Signals zu bestimmen. Die Empfangsschaltung umfasst ferner einen Demodulator, der dazu dient, das frequenzmodulierte Signal zu demodulieren, wobei die Empfangsschaltung eine Signalverarbeitungseinheit umfasst, die mit dem Demodulator und der Überwachungseinheit verbunden ist. Der Demodulator und die Überwachungseinheit sind der Signalverarbeitungseinheit also vorgeschaltet und stellen der Signalverarbeitungseinheit entsprechende Ausgangssignale zur Verfügung. Die Signalverarbeitungseinheit dient zumindest zeitweise zur Auswertung des vermittels der Überwachungseinheit bestimmten Signalparameters des frequenzmodulierten Signals und zur Auswertung des demodulierten Signals.

Bei dem Ausgangssignal der Überwachungseinheit handelt es sich also beispielsweise um ein den durch die Überwachungseinheit bestimmten Signalparameter repräsentierendes Signal. Bei dem Ausgangssignal des Demodulators handelt es sich bevorzugt um ein, das frequenzmoduliertes Signal repräsentierendes digitales Signal. Durch die vorgeschlagene Überwachungseinheit wird somit die Qualität der Datenübertagung nicht anhand der Konsistenz der übertragenen Daten wie bspw. anhand einer Prüfsumme etc. berechnet sondern es wird das tatsächlich über den Kommunikationskanal übertragenen physikalische Signal ausgewertet. Es wird also nicht die Konsistenz der Daten überprüft, was eine tatsächliche Auswertung und u.U. aufwendige und den Energiebedarf steigernde Verarbeitung des Kommunikationssignals erfordert, sondern ob ein (physikalischer) Signalparameter des Kommunikationssignal bspw. innerhalb gewisser Grenzwerte, d.h. bspw. oberhalb oder unterhalb eines vorgegebenen Werts, liegt. Dies erfolgt vorzugsweise bevor das frequenzmodulierte Signal durch die Empfangsschaltung bzw. eine Signalverarbeitungseinheit demoduliert und/oder die darin enthaltenen Daten, d.h. das Nutzsignal, entnommen werden.

Beispielsweise kann abwechselnd das frequenzmodulierte Signal dem Demodulator bzw. der Überwachungseinheit zugeführt werden. Andererseits kann das frequenzmodulierte Signal gleichzeitig sowohl der Überwachungseinheit als auch dem Demodulator zugeführt werden.

Die Signalverarbeitungseinheit, bei der es sich bevorzugt um einen Mikroprozessor handelt, kann beispielsweise in einem ersten Betriebsmodus zur Auswertung des Signalparameters des frequenzmodulierten Signals und zur Auswertung des frequenzmodulierten Signals dienen. In dem ersten Betriebsmodus kann die Signalverarbeitungseinheit also zum Auswerten des vermittels des Demodulators demodulierten frequenzmodulierten Signals dienen.

Die Vorrichtung ist ferner abwechselnd in einem Modulationsbetrieb und einem Demodulationsbetrieb betreibbar, wobei der Demodulator in dem Modulationsbetrieb ausgeschaltet ist beziehungsweise keine an dem Demodulator stammenden Signalen von der Signalverarbeitungseinheit verarbeitet werden, wobei jedoch die Überwachungsschaltung auch in dem Modulationsbetrieb einen Signalparameter des Kommunikationssignal bestimmt, welcher von der Signalverarbeitungseinheit ausgewertet wird. Auf diese Weise können von dem Modulator stammende frequenzmodulierte Signale von dem Demodulator beziehungsweise der Überwachungseinheit zurückgelesen werden und somit beispielsweise eine Selbstüberwachung vorgenommen werden. Somit können nicht nur die von Kommunikationspartner stammende Kommunikationssignale, sondern die von der Vorrichtung, wie beispielsweise dem Feldgerät, erzeugten Kommunikationssignale ausgewertet werden. Alternativ können die Kommunikationssignale bei dem es sich um frequenzmodulierte Signale handelt, die von dem Modulator ausgegeben werden, zusätzlich auch von dem Demodulator verarbeitet werden.

Ferner ist ein Messwiderstand vorgesehen, der zum Abgreifen des Kommunikationssignal dient, wobei der während des Modulationsbetriebs bestimmte Signalparameter des frequenzmodulierten Kommunikationssignals dazu dient, einen Wert des Messwiderstandes zu bestimmen. Dieser Messwiderstand kann dazu dienen, das frequenzmodulierte Kommunikationssignal abzugreifen und beispielsweise in dem Feldgerät integriert sein. Alternativ kann der Messwiderstand Teil der Zweileiterstromschleife sein. Eine über dem Messwiderstand abfallende Spannung kann zum Abgreifen des Kommunikationssignals aus der Zweileiterstromschleife dienen.

Parallel zu diesem Messwiderstand kann die Sende- und/oder Empfangseinheit geschaltet sein. Dadurch kann ein Spannungsteiler gebildet werden, vermittels dem der Widerstandswert des Messwiderstandes bestimmt wird.

In einer Ausführungsform der Vorrichtung gibt die Signalverarbeitungseinheit eine erste Diagnosemeldung aus, wenn das frequenzmodulierte Signal außerhalb einer Empfangsschwelle des Demodulators liegt. Der vorgeschlagene Demodulator ist beispielsweise und wird besonders bevorzugt, derart aufgebaut, dass er einen Arbeitsbereich mit einer oberen und unteren Empfangsschwelle aufweist. Sollte das frequenzmodulierte Signal, besonders bevorzugt dessen Amplitude, außerhalb einer der Empfangsschwellen und somit außerhalb des Arbeitsbereichs des Demodulators liegen, würde der Demodulator kein Ausgangssignal erzeugen. Die Signalverarbeitungseinheit könnte dann entsprechend eine erste Diagnosemeldung ausgeben.

In einer weiteren Ausführungsform der Vorrichtung gibt die Signalverarbeitungseinheit in Abhängigkeit des Signalparameters des frequenzmodulierten Signals eine zweite Diagnosemeldung aus. Die Signalverarbeitungseinheit kann also entweder in Abhängigkeit des von dem Demodulator ausgegebenen Ausgangssignals oder in Abhängigkeit des von der Überwachungseinheit ausgegebenen Werts des Signalparameters des frequenzmodulierten Signals eine Diagnosemeldung ausgeben. Zu diesem Zweck kann die Signalverarbeitungseinheit entweder nur das Ausgangssignal des Demodulators oder nur das Ausgangssignal der Überwachungseinheit zur Bestimmung der Diagnosemeldung verwenden. Bevorzugt wird zur Ausgabe einer Diagnosemeldung jedoch sowohl das von dem Demodulator ausgegebene Ausgangssignal als auch das von der Überwachungseinheit ausgegebene Ausgangssignal zur Bestimmung einer Diagnosemeldung verwendet.

In einer Ausführungsform der Vorrichtung handelt es sich bei dem Signalparameter um einen Wert des Kommunikationssignals vorzugsweise um die Amplitude und besonders bevorzugt um die maximale Amplitude beispielsweise einer vorgegebenen Zeitspanne. Durch die Überwachungseinheit kann somit nicht nur, wie beispielsweise durch den Demodulator das Vorliegen einer Störung ermittelt werden, sondern es kann auch aus dem Wert des Signalparameters des Kommunikationssignals weitere der Diagnose dienende Rückschlüsse gezogen werden. So kann beispielsweise der Ausfall des Demodulators erkannt werden. Ferner kann auch aufgrund eines bestimmten Werts des Signalparameters auf eine bestimmte Fehlursache, die dieser Dämpfung zugrunde liegt geschlossen werden. Eine derartige Auswertung des Kommunikationssignals wäre für den Fall, dass das Kommunikationssignal außerhalb des Arbeitsbereichs des Demodulators liegt gem. der aus dem Stand der Technik bekannten Lösungen nicht möglich, da die Signalverarbeitungseinheit in diesem Fall gar kein Ausgangssignal von dem Demodulator erhält.

In einer Ausführungsform der Vorrichtung handelt es sich bei dem Signalparameter um die Sendeamplitude des Kommunikationssignals eines Kommunikationspartners. Die vorgeschlagene Vorrichtung kann, wie bereits erwähnt, Teil eines Feldgerätes sein, dass mit einem anderen Feldgerät, d.h. einem zweiten Kommunikationspartner, über einen Feldbus verbunden ist. Über diesen Feldbus können entsprechend einem Feldbusprotokoll Kommunikationssignale gesendet werden. Somit kann ein Feldgerät mit einer vorgeschlagenen Vorrichtung zur Überwachung des Datenverkehrs auf den Feldbus dienen. Insbesondere kann auf diese Weise, die Kommunikationsverbindung zwischen einzelnen Feldbusteilnehmern überwacht und/oder diagnostiziert werden. Dadurch können Fehlerquellen auf dem Feldbus beziehungsweise bei der Datenübertragung auf dem Feldbus identifiziert werden.

In einer Ausgestaltung der Vorrichtung handelt es sich bei dem Kommunikationssignal um ein dem HART Protokoll entsprechendes Kommunikationssignal. Typischerweise sind Feldgeräte heutzutage zu Kommunikationszwecken über eine zweiadrige Leitung miteinander und/oder übergeordneten Einheit verbunden. Zur Übertragung von Feldgeräten aufgenommenen Messwerten sind aus dem Stand der Technik sowohl analoge als auch digitale Übermittlungsverfahren bekannt geworden. So kann ein Messwert beispielsweise in Form eines Stromwerts zwischen 0 mA und 20 mA beziehungsweise zwischen 4 mA und 20 mA über die Zweidrahtleitung übertragen werden. Modernere Kommunikationsverfahren nutzen jedoch eine digitale Datenübertragung bei der, ein frequenzmoduliertes Signal zur Übertragung der Daten verwendet wird. Beispielsweise überlagern sich in einer Zweidrahtstromschleife ein 0-20 mA bzw. 4-20 mA Signal und ein dem HART Protokoll entsprechendes Kommunikationssignal. Bei dem dem HART Protokoll entsprechenden Kommunikationssignal handelt es sich um ein derart frequenzmoduliertes Signal.

In einer Ausgestaltung der Vorrichtung umfasst die Empfangsschaltung ein Bandpassfilter, welcher Bandpassfilter mit dem Demodulator verbunden ist. Dem Bandpassfilter wird ein Eingangssignal zugeführt, welches unter anderem beziehungsweise zumindest das frequenzmoduliertes Kommunikationssignal umfasst. Der Bandpassfilter dient dann bevorzugt dazu, das Frequenzband, in dem das Kommunikationssignal verläuft, durchzulassen und die übrigen Frequenzen zu dämpfen. Der Bandpassfilter ist dem Demodulator somit vorgeschaltet. Zwischen dem Bandpassfilter und dem Demodulator ist ein Signalabgriff vorgesehen, welcher dazu dient, das Kommunikationssignal der Überwachungseinheit zuzuführen.

In einer Ausgestaltung der Vorrichtung umfasst die Vorrichtung eine Sendeschaltung, die zum Senden des frequenzmodulierten Signals dient. Die Sendeschaltung ist dabei bevorzugt parallel zur Empfangsschaltung angeschlossen. Dadurch kann ein von der Sendeschaltung erzeugtes Signal von der Empfangsschaltung zurückgelesen werden.

In einer Ausgestaltung der Vorrichtung handelt es sich bei der Sende- und Empfangsschaltung um ein sogenanntes HART Modem.
In einer Ausgestaltung der Vorrichtung dient die Überwachungseinheit zur Bestimmung eines, das Kommunikationssignal überlagernden Rauschens vorzugsweise während einer Sende- und/oder Empfangspause der Sende- beziehungsweise Empfangseinheit.

In einer Ausgestaltung der Vorrichtung dient die Signalverarbeitungseinheit dazu, in Abhängigkeit des Rauschens beziehungsweise des Verhältnisses des Rauschens zum Kommunikationssignal eine entsprechende zweite Diagnosemeldung auszugeben. Es wird also vorgeschlagen, vermittels der Überwachungseinheit ein sogenanntes Signal-Rausch-Verhältnis des frequenzmodulierten Signals zu bestimmen.
In einer Ausgestaltung der Vorrichtung umfasst die Vorrichtung ein Analog-Digital-Wandler, der mit der Überwachungseinheit und der Verarbeitungseinheit verbunden ist und der dazu dient, dem vermittels der Überwachungseinheit bestimmten Signalparameter in einen digitalen Wert zu verwandeln. Der Analog-Digital-Wandler kann beispielsweise auch in die Signalverarbeitungseinheit integriert sein.

In einer Ausgestaltung der Vorrichtung umfasst die Sendeeinheit einen Modulator, der dazu dient, ein von der Signalverarbeitungseinheit ausgegebenen Signal zu modulieren und ein frequenzmoduliertes Kommunikationssignal zu erzeugen.

Hinsichtlich des Verfahrens wird die Aufgabe durch ein Verfahren zur Diagnose eines Kommunikationskanals gelöst, über welchen Kommunikationskanal vermittels eines frequenzmodulierten Kommunikationssignals Daten übertragen werden,
wobei zumindest zeitweise ein Signalparameter des frequenzmodulierten Kommunikationssignals ermittelt und an eine Signalverarbeitungseinheit übertragen und von dieser ausgewertet wird,
wobei die Vorrichtung abwechselnd in einem Modulationsbetrieb und einem Demodulationsbetrieb betrieben wird,
wobei der Demodulator in dem Modulationsbetrieb ausgeschaltet ist bzw. keine von dem Demodulator stammenden Signale von der Signalverarbeitungseinheit verarbeitet werden,
wobei jedoch die Überwachungseinheit auch in dem Modulationsbetrieb einen Signalparameter des Kommunikationssignals bestimmt, welcher von der Signalverarbeitungseinheit ausgewertet wird, und dass
ein Messwiderstand vorgesehen ist, der zum Abgreifen des Kommunikationssignals dient, wobei der während des Modulationsbetriebs bestimmte Signalparameter des frequenzmodulierten Kommunikationssignals dazu dient, einen Wert des Messwiderstands (R1) zu bestimmen.

In einer Ausführungsform des Verfahrens wird das Kommunikationssignal demoduliert und das demodulierte Kommunikationssignal an einer Signalverarbeitungseinheit übertragen und von dieser ausgewertet wird,
Wie bereits erwähnt, kann das frequenzmodulierte Signal zumindest zeitweise an die Überwachungseinheit und den Demodulator oder abwechselnd zumindest zeitweise nur an den Demodulator oder nur an die Überwachungseinheit übertragen werden.

Es wird somit ein Verfahren vorgeschlagen, dass es ermöglicht, Signalparameter eines über ein Kommunikationssignal übertragenen frequenzmodulierten Signals zu bestimmen. Der Wert des Signalparameters beziehungsweise die Werte des Signalparameters können zur Bewertung der Qualität des Übertragungskanals verwendet werden. Beispielsweise kann ein Signalparameter der Signalpegel des Kommunikationssignals des sendenden Busteilnehmers verwendet werden. Dabei kann es sich um die Sendeeinheit der Vorrichtung oder die Sendeeinheit eines anderen Busteilnehmers handeln. Ferner kann durch die vorgeschlagene Überwachungseinheit der Signalpegel des Kommunikationssignals während einer Sende- beziehungsweise Empfangspause bestimmt werden. Ferner können Signalparameter auch aus dem Signalpegel abgeleitet werden. Beispielsweise kann das Signal-Rausch-Verhältnis bestimmt werden.

Die Erfindung wird anhand der nachfolgenden Zeichnungen näher erläutert. Es zeigt:

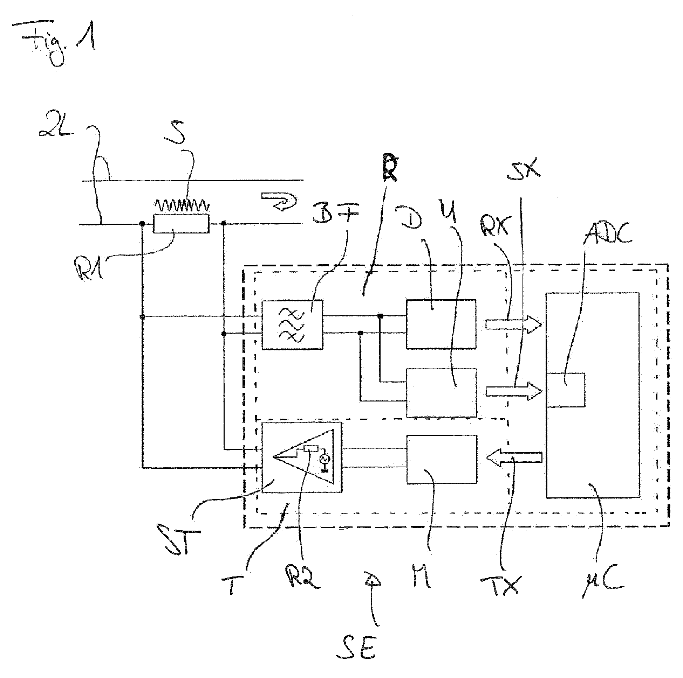

Fig. 1: eine Ausführungsform der vorgeschlagenen Vorrichtung zur Überwachung eines frequenzmodulierten Kommunikationssignals.

In Figur 1 ist ein Ersatzschaltbild einer Zweileiterstromschleife 2L dargestellt, an die eine Empfangsschaltung R angeschlossen ist. Über die Zweileiterstromschleife 2L kann ein frequenzmoduliertes Signal S übertragen werden.

Bei diesem frequenzmodulierten Signal S kann es sich beispielsweise um ein gemäß dem HART-Standard zur Datenübertragung frequenzmoduliertes Signal S handeln. Zum Erfassen dieses frequenzmodulierten Signals S ist eine Impedanz R1 vorgesehen. Zum Abgreifen des frequenzmodulierten Signals S wird eine über der Impedanz R1 abfallende Spannung abgegriffen. Diese Impedanz R1 kann in die Stromschleife 2L integriert sein oder aber auch in einer, an die Stromschleife 2L angeschlossene Vorrichtung integriert sein.

Gemäß der Ausführungsform in Fig. 1 ist eine Sende-/Empfangseinheit SE mit dem Signalabgriff verbunden. Die Sende/Empfangseinheit SE weist eine Empfangsschaltung R auf, die zum Empfangen des frequenzmodulierten Signals S dient. Die Empfangsschaltung R umfasst einen Bandpassfilter BF, einen Demodulator D sowie eine Überwachungseinheit U. Da über die Stromschleife 2L neben dem frequenzmodulierten Signal S auch andere Signale, beispielsweise ein 4 bis 20 mA Signal übertragen werden kann, wird der Bandpassfilter BF vorzugsweise dazu eingesetzt, das frequenzmodulierte Signal S von anderen auf der Stromschleife 2L vorhandenen Signalen zu trennen. Dieses gefilterte Signal wird anschließend einem Demodulator D zugeführt. Der Demodulator D dient zur Rückgewinnung des in dem frequenzmodulierten Signal S codierten digitalen Modulationssignals. Der Demodulator D erzeugt an seinem Ausgang ein digitales Signal RX beispielsweise in Form eines binärcodierten Datenstroms. Dieser Datenstrom RX wird einer Auswertereinheit µC bspw. in Form eines Mikroprozessors zugeführt. Dieser Mikroprozessor µC kann dann die vermittels des frequenzmodulierte Signals S übertragenen Daten auswerten. Der Mikroprozessor µC dient also zur Signalverarbeitung. Neben dem Demodulator D wird das, ggfs. von anderen in der Stromschleife 2L vorhandenen Signalen getrennte, frequenzmodulierte Signal S einer Überwachungseinheit U zugeführt. Diese Überwachungseinheit U kann beispielsweise zur Spitzenwertmessung des Signalpegels des frequenzmodulierten Signals S dienen. Die Überwachungseinheit kann bspw. als vorzugsweise selektive sog. Spitzenwertgleichrichter-Schaltung ausgeführt werden. Dadurch ist es möglich die Signalpegel des frequenzmodulierten Signals zu bestimmen. Durch die Überwachungseinheit U kann also die Amplitude des frequenzmodulierten Signals S bestimmt werden. Ein derartiger Spitzenwertgleichrichter ist bspw. aus dem Skript der Hochschule München Fakultät 04, kap_1neu_v19, 08/2011, Abb. 1.23, Prof. Dr. H. Zapf, Prof. Dr. C. Münker bekannt geworden.

Ein entsprechendes, die Amplitude oder den Spannungspegel repräsentierendes Signal wird von der Überwachungseinheit U als Ausgangssignal SX ausgegeben. Dieses beispielsweise als analoges Signal vorliegende Ausgangssignal SX wird gemäß der Ausführungsform in Fig. 1 einem Analog-Digital-Wandler ADC zugeführt, welcher das analoge Ausgangssignal SX der Überwachungseinheit U in ein digitales Signal wandelt. Der Analog-Digital-Wandler kann als separates Bauteil oder wie in Fig. 1 gezeigt, in dem Mikroprozessor integriert sein. Alternativ kann die Überwachungseinheit U auch ein digitales Signal, insbesondere ein binäres Signal als Ausgangssignal SX ausgeben.

Die Sendeempfangseinheit SE weist ferner eine Sendeschaltung T auf, die zur Einkopplung des frequenzmodulierten Signals S in die Zweileiterstromschleife 2L dient. Zur Erzeugung dieses frequenzmodulierten Signals S wird von dem Mikroprozessor µC beispielsweise ein binärcodierter Datenstrom TX ausgegeben, welcher einem Modulator M zugeführt wird, der ein frequenzmoduliertes Signal S erzeugt, das mittels einer Sendestufe ST in der Zweileiterstromschleife 2L eingestellt wird. Mit dem Signalabgriff über die Impedanz R1 sind sowohl die Empfangsschaltung R als auch die Sendeschaltung T die zumindest aus der Sendestufe ST und dem Modulator M besteht verbunden.

Durch die vorgeschlagene Erfindung kann die Qualität des frequenzmodulierten Signals S, bei dem es sich bevorzugt um ein HART Kommunikationssignal handelt bewertet werden und daraus Maßnahmen zur Vermeidung von Kommunikationsstörungen abgeleitet werden. Ein reibungsfreier Betrieb, der über die Zweileiterstromschleife 2L miteinander verbundenen Geräte hängt von der störungsfreien Kommunikation zwischen den Kommunikationsteilnehmern ab. Um diese reibungsfreie beziehungsweise störungsfreie Kommunikation zu gewährleisten, muss mindestens auf der Hardwareebene eine ordnungsgemäße Geräteinstallation erfolgen. Außerdem können äußere Störgrößen die Kommunikation beeinflussen. Die störungsfreie Kommunikation auf der Hardwareebene ist unter anderem von der richtigen Geräteverdrahtung, der Wahl eines geeigneten Kabels, dem richtigen Wert des Kommunikationswiderstands R2 und von elektromagnetischen Störungen, Umweltbedingungen, wie z. B. der Temperatur der Feuchtigkeit in der Prozessumgebung auftretenden mechanischen Belastungen wie bspw. Vibrationen abhängig.

Die vorliegende Erfindung ermöglicht es, einen Signalparameter des frequenzmodulierten Signals S zu messen. Der Wert beziehungsweise die Werte des Signalparameters können zur Bewertung bspw. der Qualität des Übertragungskanals verwendet werden. Die in die Empfangsschaltung integrierte Überwachungseinheit U misst dazu gemäß der Ausführungsform in Fig. 1 den Spitzenwert des Empfangssignals, d.h. des frequenzmodulierten Signals S. Dadurch kann beispielsweise der Signalpegel des sendenden Kommunikationsteilnehmers, nicht gezeigt, oder der Signalpegel beim Senden eines frequenzmodulierten Signals S durch die Sendestufe ST, oder der Signalpegel während Sende- oder Empfangspausen der Sende-/Empfangseinheit SE bestimmt werden. Aus diesen Werten kann beispielsweise das Signalrauschverhältnis, der Sendepegel der verschiedenen Busteilnehmer, die Größe des HART-Kommunikationswiderstandes R2, die kapazitive Belastung der Zweileiterstromschleife 2L, oder elektromagnetische Störungen ermittelt werden. Zur Bestimmung dieser Kennwerte kann die Signalverarbeitungseinheit µC, welche beispielsweise aus einem Mikroprozessor besteht, dienen. Dafür wird beispielsweise der Signalparameter und das frequenzmodulierte Signal S beziehungsweise ein daraus abgeleitetes Signal ausgewertet.

Die Sende-/Empfangseinheit SE kann beispielsweise Bestandteil eines Feldgerätes wie eines Sensor-, eines Faktor- oder einer Anzeigeeinheit sein.

Der durch den Widerstand R1 und R2 gebildete Spannungsteiler kann beim Senden des frequenzmodulierten Signals S über die Sendestufe zur Bestimmung der Impedanz R1 verwendet werden. Dafür kann der Spannungsabfall über dem Widerstand R1 vermittels der Überwachungseinheit U gemessen werden. Dadurch kann eine Beschädigung bspw. des Widerstand R1 anhand des Werts des Signalparameters des frequenzmodulierten Signals, in diesem Fall des Sendesignals, ermittelt werden.

### Bezugszeichenliste

- 2L: Zweileiterstromschleife
- S: frequenzmoduliertes Signal
- R1: erste Impedanz
- R2: zweite Impedanz
- R: Empfangsschaltung
- T: Sendeschaltung
- ST: Sendestufe
- BF: Bandpassfilter
- D: Demodulator
- U: Überwachungseinheit
- RX: Ausgangssignal des Demodulators
- SX: Ausgangssignal der Überwachungsschaltung
- TX: Eingangssignal Modulator
- ADC: Analog-Digital-Wandler
- µC: Mikroprozessor
- M: Modulator
- SE: Sende-/Empfangseinheit

## Patentansprüche

1. Vorrichtung zur Diagnose eines Kommunikationskanals eines Feldbusprotokolls,
wobei ein Kommunikationssignal (S) zur Datenübertragung über den Kommunikationskanal dient,
wobei es sich bei dem Kommunikationssignal (S) um ein frequenzmoduliertes Signal handelt,
wobei die Vorrichtung eine Empfangsschaltung (R) umfasst, die zum Empfangen des frequenzmodulierten Signals (S) dient,
wobei die Empfangsschaltung (R) eine Überwachungseinheit (U) umfasst, die dazu dient, einen Signalparameter (SX) des frequenzmodulierten Signals (S) zu bestimmen,
wobei die Empfangsschaltung (R) einen Demodulator (D) umfasst, der dazu dient, das frequenzmodulierte Signal (S) zu demodulieren,
wobei die Empfangsschaltung (R) eine Signalverarbeitungseinheit (µC) umfasst, die mit dem Demodulator (D) und der Überwachungseinheit (U) verbunden ist,
wobei die Signalverarbeitungseinheit (µC) zumindest zeitweise zur Auswertung des vermittels der Überwachungseinheit (U) bestimmten Signalparameters (SX) des frequenzmodulierten Signals (S) dient,
wobei die Vorrichtung abwechselnd in einem Modulationsbetrieb und einem Demodulationsbetrieb betreibbar ist,
wobei der Demodulator (D) in dem Modulationsbetrieb ausgeschaltet ist bzw. keine von dem Demodulator (D) stammenden Signale von der Signalverarbeitungseinheit (µC) verarbeitet werden,
**dadurch gekennzeichnet,**
**dass** jedoch die Überwachungseinheit (U) auch in dem Modulationsbetrieb einen Signalparameter (SX) des Kommunikationssignals (S) bestimmt, welcher von der Signalverarbeitungseinheit (µC) ausgewertet wird, und
**dass** ein Messwiderstand (R1) vorgesehen ist, der zum Abgreifen des Kommunikationssignals (S) dient, und
wobei der während des Modulationsbetriebs bestimmte Signalparameter (SX) des frequenzmodulierten Kommunikationssignals (S) dazu dient, einen Wert des Messwiderstands (R1) zu bestimmen.

2. Vorrichtung nach Anspruch 1,
wobei die Signalverarbeitungseinheit (µC) zumindest zeitweise zur Auswertung des vermittels der Überwachungseinheit (U) bestimmten Signalparameters (SX) des frequenzmodulierten Signals (S) und zur Auswertung des demodulierten Signals (RX) dient.

3. Vorrichtung nach Anspruch 1 oder 2,
wobei die Signalverarbeitungseinheit (µC) eine erste Diagnosemeldung ausgibt, wenn das frequenzmodulierte Signal (S) außerhalb einer Empfangsschwelle des Demodulators (D) liegt.

4. Vorrichtung nach Anspruch 1, 2 oder 3,
wobei die Signalverarbeitungseinheit (µC) in Abhängigkeit des Signalparameters (SX) des frequenzmodulierten Signals (S) eine zweite Diagnosemeldung ausgibt.

5. Vorrichtung nach einem vorherigen Ansprüche,
wobei es sich bei dem Signalparameter (SX) um einen Wert des Kommunikationssignals (S), vorzugsweise die Amplitude und besonders bevorzugt die maximale Amplitude bspw. während einer vorgegebenen Zeitspanne, handelt.

6. Vorrichtung nach einem vorherigen Ansprüche,
wobei es sich bei dem Signalparameter (SX) um die Sendeamplitude des Kommunikationssignals eines Kommunikationspartners handelt.

7. Vorrichtung nach einem vorherigen Ansprüche,
wobei es sich bei dem Kommunikationssignal (S) um ein dem HART-Protokoll entsprechendes Kommunikationssignal handelt.

8. Vorrichtung nach einem vorherigen Ansprüche,
wobei die Empfangsschaltung (R) einen Bandpassfilter (BF) umfasst,
welcher Bandpassfilter (BF) mit dem Demodulator (D) verbunden ist.

9. Vorrichtung nach einem vorherigen Ansprüche,
wobei die Vorrichtung eine Sendeschaltung (T) umfasst, die zum Senden des frequenzmodulierten Signals (S) dient.

10. Vorrichtung nach Anspruch 9,
wobei es sich bei der Sende- und Empfangsschaltung (SE) um ein sog. HART-Modem handelt.

11. Vorrichtung nach Anspruch 4,
wobei die Überwachungseinheit (U) zur Bestimmung eines das Kommunikationssignal (S) überlagernden Rauschens, vorzugsweise während einer Sende- und/oder Empfangspause der Sende- bzw. Empfangseinheit (SE), dient.

12. Vorrichtung nach Anspruch 11,
wobei die Signalverarbeitungseinheit (µC) dazu dient, in Abhängigkeit des Rauschens bzw. des Verhältnisses des Rauschens zum Kommunikationssignal (S) die entsprechende zweite Diagnosemeldung auszugeben.

13. Vorrichtung nach einem vorherigen Ansprüche,
wobei die Vorrichtung einen Analog-Digital-Wandler (ADC) umfasst, der mit der Überwachungseinheit (U) und der Signalverarbeitungseinheit (µC) verbunden ist, und der dazu dient, den vermittels der Überwachungseinheit (U) bestimmten Signalparameter (SX) in ein digitales Signal zu wandeln.

14. Vorrichtung nach einem vorherigen Ansprüche,
wobei die Sendeeinheit (T) einen Modulator (M) umfasst, der dazu dient, ein von der Signalverarbeitungseinheit (µC) ausgegebenes Signal zu modulieren und ein frequenzmoduliertes Kommunikationssignal (S) zu erzeugen.

15. Verfahren zur Diagnose eines Kommunikationskanals eines Feldbusprotokolls mittels einer Vorrichtung nach Anspruch 1,
über welchen Kommunikationskanal vermittels eines frequenzmodulierten Kommunikationssignals (S) Daten übertragen werden,
wobei zumindest zeitweise ein Signalparameter (SX) des frequenzmodulierten Kommunikationssignals (S) ermittelt und an eine Signalverarbeitungseinheit (µC) übertragen und von dieser ausgewertet wird,
wobei die Vorrichtung abwechselnd in einem Modulationsbetrieb und einem Demodulationsbetrieb betrieben wird,
wobei der Demodulator (D) in dem Modulationsbetrieb ausgeschaltet ist bzw. keine von dem Demodulator (D) stammenden Signale von der Signalverarbeitungseinheit (µC) verarbeitet werden,
**dadurch gekennzeichnet**
**dass** jedoch die Überwachungseinheit (U) auch in dem Modulationsbetrieb einen Signalparameter (SX) des Kommunikationssignals (S) bestimmt, welcher von der Signalverarbeitungseinheit (µC) ausgewertet wird, und dass
ein Messwiderstand (R1) vorgesehen ist, der zum Abgreifen des Kommunikationssignals (S) dient,
wobei der während des Modulationsbetriebs bestimmte Signalparameter (SX) des frequenzmodulierten Kommunikationssignals (S) dazu dient, einen Wert des Messwiderstands (R1) zu bestimmen.

16. Verfahren nach Anspruch 15,
wobei das Kommunikationssignal (S) zumindest zeitweise demoduliert wird und das demodulierte Kommunikationssignal (RX) an die Signalverarbeitungseinheit (µC) übertragen und von dieser ausgewertet wird.

## Claims

1. Apparatus designed to diagnose a communication channel of a fieldbus protocol, wherein a communication signal (S) is used for data transmission via the communication channel,
wherein the communication signal (S) is a frequency-modulated signal,
wherein said apparatus comprises a reception circuit (R) which serves to receive the frequency-modulated signal (S),
wherein the reception circuit (R) comprises a monitoring unit (U) which is used to determine a signal parameter (SX) of the frequency-modulated signal (S),
wherein the reception circuit (R) comprises a demodulator (D), which is used to demodulate the frequency-modulated signal (S),
wherein the reception circuit (R) comprises a signal processing unit (µC), which is connected to the demodulator (D) and the monitoring unit (U),
wherein the signal processing unit (µC) at least temporarily serves to evaluate the signal parameter (SX) of the frequency-modulated signal (S) which is determined by means of the monitoring unit (U),
wherein the apparatus can be operated alternately in a modulation mode and a demodulation mode,
wherein the demodulator (D) is disabled in the modulation mode and none of the signals from the demodulator (D) are processed by the signal processing unit (µC), **characterized in that**,
even in the modulation mode the monitoring unit (U) nevertheless determines a signal parameter (SX) of the communication signal (S) which is evaluated by the signal processing unit (µC), and **in that** a precision resistor (R1) is provided which is used to pick up the communication signal (S), and
wherein the signal parameter (SX) of the frequency-modulated communication signal (S) which is determined during the modulation mode is used to determine a value of the precision resistor (R1).

2. Apparatus as claimed in Claim 1,
wherein the signal processing unit (µC) at least temporarily serves to evaluate the signal parameter (SX) of the frequency-modulated signal (S) which is determined by means of the monitoring unit (U) and to evaluate the demodulated signal (RX).

3. Apparatus as claimed in Claim 1 or 2,
wherein the signal processing unit (µC) outputs a first diagnostic message if the frequency-modulated signal (S) is outside a reception threshold of the demodulator (D).

4. Apparatus as claimed in Claim 1, 2 or 3,
wherein the signal processing unit (µC) outputs a second diagnostic message depending on the signal parameter (SX) of the frequency-modulated signal (S).

5. Apparatus as claimed in one of the previous claims,
wherein the signal parameter (SX) is a value of the communication signal (S), preferably the amplitude and most preferably the maximum amplitude, for example, during a predefined time.

6. Apparatus as claimed in one of the previous claims,
wherein the signal parameter (SX) is the transmission amplitude of the communication signal of a communication partner.

7. Apparatus as claimed in one of the previous claims,
wherein the communication signal (S) is a communication signal that corresponds to the HART protocol.

8. Apparatus as claimed in one of the previous claims,
wherein the reception circuit (R) comprises a bandpass filter (BF),
said bandpass filter (BF) being connected to the demodulator (D).

9. Apparatus as claimed in one of the previous claims,
wherein the apparatus comprises a transmission circuit (T) which serves to transmit the frequency-modulated signal (S).

10. Apparatus as claimed in Claim 9,
wherein the transmission and reception circuit (SE) is a HART modem.

11. Apparatus as claimed in Claim 4,
wherein the monitoring unit (U) is used to determine a noise superimposed on the communication signal (S), preferably during a break in transmission and/or reception of the transmission or reception unit (SE).

12. Apparatus as claimed in Claim 11,
wherein the signal processing unit (µC) is used to output the corresponding second diagnostic message depending on the noise and/or the ratio of the noise to the communication signal (S).

13. Apparatus as claimed in one of the previous claims,
wherein the apparatus comprises an analog-to-digital converter (ADC) which is connected to the monitoring unit (U) and the signal processing unit (µC), and which is used to convert the signal parameter (SX), which is determined by means of the monitoring unit (U), into a digital signal.

14. Apparatus as claimed in one of the previous claims,
wherein the transmission unit (T) comprises a modulator (M) which is used to modulate a signal output by the signal processing unit (µC) and to generate a frequency-modulated communication signal (S).

15. Procedure designed to diagnose a communication channel of a fieldbus protocol using an apparatus as claimed in Claim 1,
wherein data are transmitted via said communication channel by means of a frequency-modulated communication signal (S),
wherein a signal parameter (SX) of the frequency-modulated communication signal (S) is determined at least temporarily and transmitted to a signal processing unit (µC) and processed by said signal processing unit,
wherein the apparatus is alternately operated in a modulation mode and a demodulation mode,
wherein the demodulator (D) is disabled in the modulation mode and none of the signals from the demodulator (D) are processed by the signal processing unit (µC) **characterized in that**,
even in the modulation mode the monitoring unit (U) nevertheless determines a signal parameter (SX) of the communication signal (S) which is evaluated by the signal processing unit (µC), and **in that** a precision resistor (R1) is provided which is used to pick up the communication signal (S), and
wherein the signal parameter (SX) of the frequency-modulated communication signal (S) which is determined during modulation mode is used to determine a value of the precision resistor (R1).

16. Procedure as claimed in Claim 15,
wherein the communication signal (S) is demodulated at least temporarily and that the demodulated communication signal (RX) is transmitted to the signal processing unit (µC) and processed by said signal processing unit.

## Revendications

1. Dispositif destiné au diagnostic d'une voie de communication d'un protocole de bus de terrain,
pour lequel un signal de communication (S) sert à la transmission de données via la voie de communication,
pour lequel il s'agit, concernant le signal de communication (S), d'un signal modulé en fréquence,
lequel dispositif comprend un circuit de réception (R) qui sert à la réception du signal modulé en fréquence (S),
le circuit de réception (R) comprenant une unité de contrôle (U) qui sert à déterminer un paramètre de signal (SX) du signal modulé en fréquence (S),
le circuit de réception (R) comprenant un démodulateur (D), qui sert à démoduler le signal modulé en fréquence (S),
le circuit de réception (R) comprenant une unité de traitement de signal (µC), qui est reliée avec le démodulateur (D) et l'unité de contrôle (U),
l'unité de traitement de signal (µC) servant au moins temporairement au traitement du paramètre de signal (SX) du signal modulé en fréquence (S) déterminé au moyen de l'unité de contrôle (U), le dispositif pouvant être exploité alternativement dans un mode de modulation et dans un mode de démodulation,
le démodulateur (D) étant désactivé en mode de modulation et aucun signal provenant du démodulateur (D) n"étant traité par l'unité de traitement de signal (µC),
**caractérisé,**
**en ce que** l'unité de contrôle (U) détermine néanmoins également en mode de modulation un paramètre de signal (SX) du signal de communication (S), lequel signal est traité par l'unité de traitement de signal (µC), et en ce qu'est prévue une résistance de précision (R1) qui sert au prélèvement du signal de communication (S), et
le paramètre de signal (SX) du signal de communication modulé en fréquence (S), déterminé pendant le mode de modulation, servant à déterminer une valeur de la résistance de précision (R1).

2. Dispositif selon la revendication 1,
pour lequel l'unité de traitement de signal (µC) sert au moins temporairement au traitement du paramètre de signal (SX) du signal modulé en fréquence (S) déterminé au moyen de l'unité de contrôle (U) et pour le traitement du signal démodulé (RX).

3. Dispositif selon la revendication 1 ou 2,
pour lequel l'unité de traitement de signal (µC) émet un premier message de diagnostic lorsque le signal modulé en fréquence (S) se situe en dehors d'un seuil de réception du démodulateur (D).

4. Dispositif selon la revendication 1, 2 ou 3,
pour lequel l'unité de traitement de signal (µC) émet en fonction du paramètre de signal (SX) du signal modulé en fréquence (S) un deuxième message de diagnostic.

5. Dispositif selon l'une des revendications précédentes,
pour lequel il s'agit, concernant le paramètre de signal (SX), d'une valeur du signal de communication (S), de préférence de l'amplitude et particulièrement de préférence de l'amplitude maximale, par exemple, pendant une période de temps prédéfinie.

6. Dispositif selon l'une des revendications précédentes,
pour lequel il s'agit, concernant le paramètre de signal (SX), d'une amplitude d'émission du signal d'un partenaire de communication.

7. Dispositif selon l'une des revendications précédentes,
pour lequel il s'agit, concernant le signal de communication (S), d'un signal de communication conforme au protocole HART.

8. Dispositif selon l'une des revendications précédentes,
pour lequel le circuit de réception (R) comprend un filtre passe-bande (BF), lequel filtre passe-bande (BF) est relié avec le démodulateur (D).

9. Dispositif selon l'une des revendications précédentes,
lequel dispositif comprend un circuit d'émission (R) qui sert à l'émission du signal modulé en fréquence (S).

10. Dispositif selon la revendication 9,
pour lequel il s'agit, concernant le circuit d'émission et de réception (SE), d'un modem HART.

11. Dispositif selon la revendication 4,
pour lequel l'unité de contrôle (U) sert à la détermination d'un bruit se superposant au signal de communication (S), de préférence pendant une pause d'émission et/ou de réception de l'unité d'émission ou de réception (SE).

12. Dispositif selon la revendication 11,
pour lequel l'unité de traitement de signal (µC) sert à émettre, en fonction du bruit ou du rapport bruit / signal de communication (S), le deuxième message de diagnostic correspondant.

13. Dispositif selon l'une des revendications précédentes,
pour lequel le dispositif comprend un convertisseur analogique-numérique (ADC) qui est relié avec l'unité de contrôle (U) et l'unité de traitement de signal (µC), et qui sert à convertir en un signal numérique le paramètre de signal (SX) déterminé au moyen de l'unité de contrôle (U).

14. Dispositif selon l'une des revendications précédentes,
pour lequel l'unité d'émission (T) comprend un modulateur (M) qui sert à moduler le signal émis par l'unité de traitement de signal (µC) et à générer un signal de communication modulé en fréquence (S).

15. Procédé destiné au diagnostic d'une voie de communication d'un protocole de bus de terrain au moyen d'un dispositif selon la revendication 1,
voie de communication par l'intermédiaire de laquelle sont transmises des données au moyen d'un signal de communication modulé en fréquence (S),
un paramètre de signal (SX) du signal de communication modulé en fréquence (S) étant déterminé au moins temporairement et transmis à une unité de traitement de signal (µC) et traité par cette dernière,
le dispositif étant exploité alternativement dans un mode de modulation et dans un mode de démodulation,
le démodulateur (D) étant désactivé en mode de modulation et aucun signal provenant du démodulateur (D) n'étant traité par l'unité de traitement de signal (µC), **caractérisé**
**en ce que** l'unité de contrôle (U) détermine néanmoins également en mode de modulation un paramètre de signal (SX) du signal de communication (S), lequel signal est traité par l'unité de traitement de signal (µC), et en ce qu'est prévue une résistance de précision (R1), qui sert au prélèvement du signal de communication (S),
le paramètre de signal (SX) du signal de communication modulé en fréquence (S), déterminé pendant le mode de modulation, servant à déterminer une valeur de la résistance de précision (R1).

16. Procédé selon la revendication 15,
pour lequel le signal de communication (S) est démodulé au moins temporairement et le signal de communication démodulé (RX) est transmis à l'unité de traitement de signal (µC) et traité par celle-ci.
